# EUROPEAN PATENT APPLICATION

(11) **EP 4 730 504 A1**
(43) Date of publication of application: **22.04.2026**
(21) Application number: 25174142.7
(22) Date of filing: 05.05.2025
(51) Int. Cl.: H01M 50/204, H01M 50/209, H01M 50/249

(54) **BATTERY MODULE AND BATTERY PACK INCLUDING THE SAME**

(30) Priority: 17.10.2024 KR 20240142237
(71) Applicant: Hyundai Motor Company, Seoul 06797 (KR); Kia Corporation, Seoul 06797 (KR)
(72) Inventor: CHUNG, Kyu Bin, Hwaseong-si, Gyeonggi-do 18280 (KR); JU, Jae Hyeon, Hwaseong-si, Gyeonggi-do 18280 (KR); JO, Min Je, Hwaseong-si, Gyeonggi-do 18280 (KR); NOH, Hwan, Hwaseong-si, Gyeonggi-do 18280 (KR); JEON, Hyun Wook, Hwaseong-si, Gyeonggi-do 18280 (KR); JIN, Hyeon Su, Hwaseong-si, Gyeonggi-do 18280 (KR); BANG, Min Sik, Hwaseong-si, Gyeonggi-do 18280 (KR)
(74) Representative: Isarpatent

(57) **Abstract**

A battery pack includes a battery module, a reinforcing bar provided in the battery module and disposed across the battery pack such that the reinforcing bar supplements or replaces a reinforcing member, thereby achieving weight reduction and increased energy density with fewer reinforcing members, while having high rigidity and collision stability.

## Description

### TECHNICAL FIELD

The present disclosure relates to a battery module including a reinforcing bar and a battery pack including the battery module, which can increase rigidity and reduce weight.

### BACKGROUND

Technologies for carbon reduction may address environmental issues such as extreme temperatures. For example, carbon reduction may be achieved by producing energy through eco-friendly methods rather than using fossil fuels, where the generated energy may be stored in the form of electrical energy. The stored energy may be used in vehicles, industrial sites, and households.

In some cases, the use of batteries capable of storing and retrieving electrical energy is essential for utilizing electrical energy may achieve carbon reduction. Therefore, securing battery performance may be critical to ensuring sufficient storage and convenient usage of electrical energy.

In some cases, batteries may use the redox reaction of metal ions, and in order to improve the capacity, charging and discharging performance, and efficiency of batteries, metal ions are used at high densities. The batteries may include materials that make up electrolytes and solid electrolytes. In general, as performance of batteries improves, stability thereof decreases.

In some cases, batteries used in vehicles, industries, and households may be manufactured as a physical unit known as a pack. A battery pack may contain and seal a plurality of battery cells inside a battery case to prevent the spread of fire in the event of thermal runaway or other accidents. The battery pack may also serve to protect the internal battery cells from degradation caused by the effects of the external environment or against physical damage.

In some cases, the battery pack may contain a plurality of battery cells embedded in an intermediate form, such as a module or assembly (e.g., cell module assembly (CMA)). For a battery module or assembly, a plurality of battery cells may be assembled and configured into a single module or assembly, and a plurality of modules are fastened inside a pack case to complete the battery pack. During servicing of the battery, servicing is performed on individual modules or assemblies to facilitate the overall maintenance.

The plurality of individual battery cells that make up the module or assembly may include a positive electrode, a negative electrode, and an electrolyte. As heat is generated in the battery cells during charging and discharging, effective heat dissipation may be provided for the battery cells. In addition, in terms of the battery module, assembly, or pack, a design for efficient heat dissipation may help to prevent safety accidents.

In particular, the battery module and the battery pack including the same are important components that have a substantial impact on vehicle marketability. The total energy capacity and the weight of the battery pack itself directly affect the vehicle's driving range. To enhance vehicle marketability, it may be necessary to reduce the weight of the battery module and the battery pack including the same, while increasing the total energy capacity and energy density by enhancing the integration density of the battery module in the battery pack. In some cases, the number of reinforcing members (e.g., transverse members) or through-mountings configured to support the battery pack has been reduced, which may result in reduced collision stability and other issues in vehicles compared to conventional designs.

### SUMMARY

The present disclosure describes a battery module and a battery pack including the same, which have a reinforcing bar provided in the battery module, where the reinforcing bar is disposed to span across the battery pack such that the reinforcing bar replaces a reinforcing member, thereby achieving weight reduction and increased energy density with fewer reinforcing members, while having high rigidity and collision stability.

According to one aspect of the subject matter described in this application, a battery pack includes a pack case comprising a plurality of reinforcing members, a battery module disposed between the plurality of reinforcing members, where the battery module includes a plurality of battery cells that are stacked inside the battery module, and a reinforcing bar inserted into the battery module and provided between adjacent battery cells among the plurality of battery cells, where the reinforcing bar includes coupling protrusions that protrude from ends of the reinforcing bar and extend toward an outside of the battery module, and the plurality of reinforcing members and the coupling protrusions of the reinforcing bar are fastened to the pack case.

Implementations according to this aspect can include one or more of the following features. For example, the battery module can be one of a plurality of battery modules that are mounted to the pack case, where the reinforcing bar is one of a plurality of reinforcing bars that are inserted into the plurality of battery modules, respectively, and that are disposed across the pack case. In some examples, each of the plurality of reinforcing members extends in a lengthwise direction of the pack case, where the reinforcing bar extends in a width direction of the pack case and is coupled to at least one of the plurality of reinforcing members.

In some implementations, the coupling protrusions of the reinforcing bar can include a first coupling protrusion that is disposed at a first end of the reinforcing bar and coupled to one of the coupling protrusions of the adjacent reinforcing bar, and a second coupling protrusion that is disposed at a second end of the reinforcing bar and coupled to one of the plurality of reinforcing members. In some examples, heights of the coupling protrusions of the reinforcing bars of adjacent battery modules among the plurality of battery modules are different from each other, where the coupling protrusions of the reinforcing bars of the adjacent battery modules overlap with each other along a vertical direction and are coupled to one of the plurality of reinforcing members.

In some implementations, at least one of the plurality of reinforcing members includes a restricting portion that is disposed at an end thereof and extends in a height direction, where the restricting portion covers an end surface of one of the coupling protrusions and defines assembly locations of the at least one of the plurality of reinforcing members and the one of the coupling protrusions. In some examples, the coupling protrusions of the reinforcing bars of the adjacent battery modules include a lower coupling protrusion and an upper coupling protrusion that overlap with each other along the vertical direction, where the restricting portion covers the lower coupling protrusion. In some implementations, a lower surface of the upper coupling protrusion and an upper surface of the lower coupling protrusion are coupled to each other through a complementary protrusion-groove structure.

In some implementations, the plurality of reinforcing members includes a first reinforcing member and a second reinforcing member, where a width of the first reinforcing member is greater than a width of the second reinforcing member. In some implementations, the battery pack further includes a fastening bracket disposed at an inner side surface of the pack case and fastened to one of the coupling protrusions to thereby couple the reinforcing bar to the pack case. In some examples, the fastening bracket and the one of the coupling protrusions are coupled through a complementary protrusion-groove structure.

In some implementations, the pack case has a buffer space defined between an inner side surface of the pack case and the battery module.

According to another aspect, a battery module includes a plurality of battery cells that are stacked inside the battery module, and a reinforcing bar provided between adjacent battery cells among the plurality of battery cells, where the reinforcing bar includes coupling protrusions that protrude from ends of the reinforcing bar and extends toward an outside of the battery module.

Implementations according to this aspect can include one or more of the following features or the features described above. For example, heights of the coupling protrusions of the reinforcing bar are different from each other. In some implementations, the battery module further includes a side cover that covers side surfaces of the plurality of battery cells, where the coupling protrusions pass through the side cover and protrude to the outside of the battery module.

In some implementations, the battery module further includes a clamp that is disposed at lower portions of the plurality of battery cells and extends along a stacking direction of the plurality of battery cells, where the clamp intersects with the plurality of battery cells and the reinforcing bar and is configured to secure ends of the plurality of battery cells. In some examples, the clamp includes a clamp fixing portion that is disposed at a position corresponding to the reinforcing bar and coupled to the reinforcing bar.

In some implementations, the battery module further includes a top cover that is disposed above the plurality of battery cells and the reinforcing bar and covers the plurality of battery cells and the reinforcing bar. In some examples, the top cover includes a top cover fixing portion that is disposed at a position corresponding to the reinforcing bar and coupled to the reinforcing bar.

According to another aspect, a vehicle includes the battery pack including the battery module described above.

In some implementations, the battery module and the battery pack including the same according to the present disclosure can provide a battery module and a battery pack including the same, which have a reinforcing bar provided in the battery module, where the reinforcing bar is disposed to span across the battery pack such that the reinforcing bar replaces a reinforcing member, thereby achieving weight reduction and increased energy density with fewer reinforcing members, while having high rigidity and collision stability.

The effects which can be achieved in the present disclosure are not limited to the effects mentioned above, and other effects not mentioned above will be clearly appreciated from the following description by those skilled in the art.

### BRIEF DESCRIPTION OF THE DRAWINGS

FIG. 1 is a view showing an example of a battery pack.
FIG. 2 is a view illustrating cross-section B-B' in FIG. 1.
FIG. 3 is an enlarged view of section X in FIG. 2.
FIG. 4 is an enlarged view of section Y in FIG. 2.
FIG. 5 is an enlarged view of section Z in FIG. 2.
FIG. 6 is a view illustrating an example of a reinforcing bar.
FIG. 7 is a view of an example of a coupling protrusion of the reinforcing bar, when viewed from below.
FIG. 8 is a view of the coupling protrusion of the reinforcing bar, when viewed from above.
FIG. 9 is a view illustrating the coupling of the reinforcing bar.
FIG. 10 is a view illustrating an example of a fastening bracket.
FIG. 11 is a view illustrating the coupling of the fastening bracket and the reinforcing bar.
FIG. 12 is a view illustrating an example of a battery module.
FIG. 13 is an exploded perspective view of the battery module.
FIG. 14 is a cross-sectional view showing cross-section A-A' in FIG. 12.
FIG. 15 is a view showing an example of a vehicle including a battery pack of the present disclosure.

### DETAILED DESCRIPTION

Hereinafter, one or more implementations will be described in detail with reference to the drawings. The same reference numerals are given to the same or similar components regardless of reference numerals, and a repetitive description thereof will be omitted.

In some implementations, a battery pack BP of the present disclosure can include a plurality of battery modules 100 mounted inside a pack case 300. For example, the pack case 300 is in the shape of a housing having an internal space. The pack case 300 is molded from a material with relatively high rigidity to protect the battery modules 100 inside. In particular, for a battery mounted on a vehicle, the pack case 300 can be molded from a metal material to ensure performance against a collision and, in the event of a fire inside, prevent the spread of the fire to the outside. In addition, among metals, aluminum can be used for molding to ensure formability and light weight. The pack case 300 of the present disclosure is not limited to the materials or shapes presented above.

The pack case 300 can include a lower panel, an outer member, and a reinforcing member 310 for ease of assembly and stability. The lower panel can be disposed on a lower portion of the pack case 300 such that the battery modules 100 can be seated thereon, and the outer member can be disposed along a perimeter of the lower panel such that the battery modules 100 installed inside the battery pack BP can be protected from the outside. In addition, the lower panel and the outer member can together form an internal space in which the battery modules 100 are mounted. For example, the reinforcing member 310 can include a frame, a bar, a beam, etc.

In some examples, the reinforcing member 310 can be disposed on the lower panel to span across the battery pack BP, and can partition the internal space of the battery pack BP and divide the internal space in which the battery modules 100 are mounted. The reinforcing member 310 can form a load path against external impact through the structure described above, thereby enhancing collision stability of the battery pack BP to protect the battery modules 100 mounted inside the battery pack BP from external impact and increasing rigidity of the battery pack BP itself.

In some examples, the reinforcing member 310 can isolate the plurality of adjacent battery modules 100 installed in the internal space of the battery pack BP, thereby preventing a heat transfer phenomenon in which heat and flame generated in a specific one of the battery modules 100 spread to its adjacent battery modules 100. In addition, a plurality of mountings, including through-mountings, can be formed and disposed on the battery pack BP to ensure robust coupling between a vehicle body and the battery pack BP and performance against a collision.

The lower panel, the outer member, and the reinforcing member 310, which need to withstand a collision or external impact from below, can be manufactured relatively thick, and can be manufactured using various methods such as extrusion, casting, and pressing. In addition, when the lower panel, the outer member, and the reinforcing member 310 are manufactured using an extrusion method, it is possible to achieve both weight reduction and rigidity by adopting a hollow structure. In addition, the lower panel, the outer member, and the reinforcing member 310 can be coupled and assembled in various ways, such as bonding, welding, and mechanical fastening.

The battery modules 100 and the battery pack BP on which the battery modules 100 are mounted are key components that have a substantial impact on the marketability of an electrified vehicle. The battery modules 100 and the battery pack BP have a substantial impact on an electrified vehicle in terms of total energy, total weight, driving range, charging speed, and the like, and improvements through weight reduction and maximization of integration density thereof may help enhance marketability. In some cases, it may be necessary to reduce the aforementioned components of the battery pack BP, such as the reinforcing member 310 and the through-mounting that affect the integration density enhancement. However, reducing the number of the reinforcing members 310 or the through-mountings in the battery pack BP may reduce performance against a collision, rigidity, and heat transfer prevention performance.

In resolving such issues, the present disclosure proposes the battery module 100 including a reinforcing bar 200, which can replace and supplement the function of the reinforcing member 310, and the battery pack BP including the battery module 100. As such, by reducing and replacing the reinforcing members 310, the present disclosure proposes a method for achieving weight reduction and maximizing integration density, while easily ensuring the performance against a collision, rigidity, and heat transfer prevention performance.

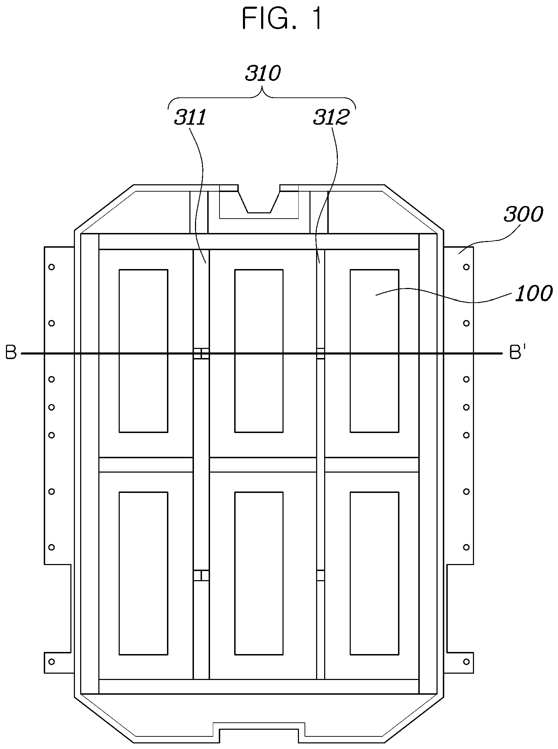

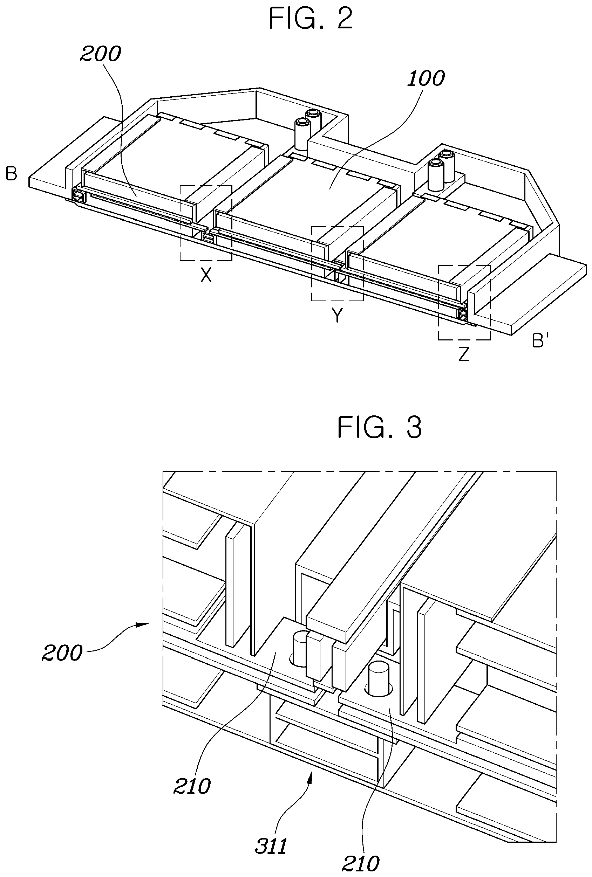

FIG. 1 is a view showing a battery pack, and FIG. 2 is a view illustrating cross-section B-B' in FIG. 1. A battery pack of the present disclosure will be described with reference to FIG. 1 and FIG. 2.

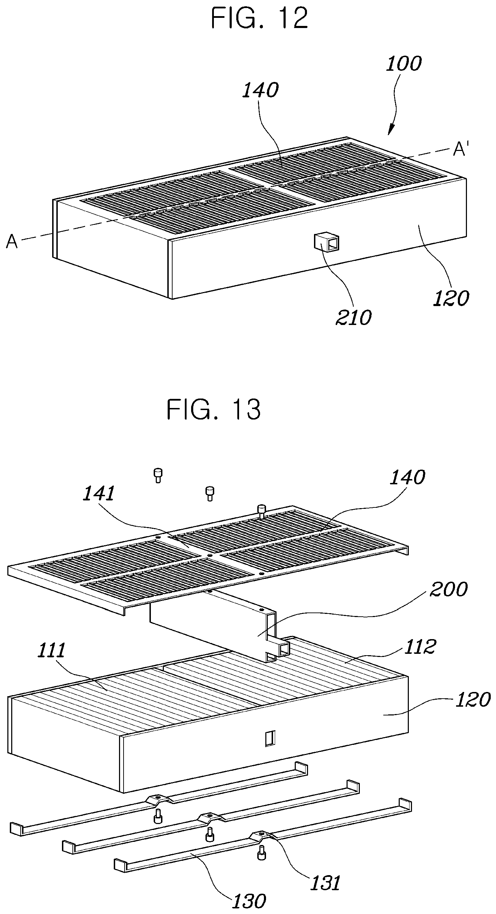

The battery pack BP of the present disclosure can include: the battery module 100 on which a plurality of battery cells are stacked; the reinforcing bar 200 inserted into the battery module 100 and provided between some adjacent battery cells among the battery cells, where coupling protrusions 210, extending toward the outside of the battery module 100 and protruding, are formed at both ends of the reinforcing bar 200; and the pack case 300 including a plurality of the reinforcing members 310, where the battery modules 100 are mounted at a point between the reinforcing members 310, and the reinforcing member 310 and the coupling protrusions 210 of the reinforcing bar 200 are fastened to the pack case 300. The battery modules 100 will be described later with reference to FIGS. 12-14.

For example, a plurality of the battery modules 100 can be provided and mounted on the pack case 300, and the reinforcing bars 200 of the adjacent battery modules 100 can be disposed to span across the pack case 300. In addition, the reinforcing member 310 can extend in a lengthwise direction of the battery pack, and the reinforcing bar 200 can extend in a width direction of the battery pack to be coupled to the reinforcing member 310. In addition, the coupling protrusion 210 formed at one end of the reinforcing bar 200 can be coupled to the coupling protrusion 210 of the adjacent reinforcing bar 200, and the coupling protrusion 210 formed at the other end of the reinforcing bar 200 can be coupled to the reinforcing member 310.

The plurality of reinforcing bars 200 disposed in this manner can form a load path together with the reinforcing member 310 extending in the lengthwise direction, thereby effectively ensuring performance against a collision of the battery pack and replacing the additional reinforcing member 310 that should be disposed in the width direction.

In addition, the reinforcing bar 200 can block direct contact between adjacent battery cells with the reinforcing bar 200 interposed therebetween, thereby preventing a fire that occurs in a specific battery cell from spreading to another battery cell.

In the implementation illustrated in FIG. 1, a plurality of the battery modules 100 can be provided and disposed in the battery pack, and the reinforcing member 310, which extends in the lengthwise direction of the battery pack, can be disposed between the adjacent battery modules 100 to divide the internal space of the battery pack while spanning across the battery pack. The reinforcing member 310 can form a load path in the battery pack to ensure performance against a collision of the battery pack. In addition, the reinforcing member 310 can block direct contact between the adjacent battery modules 100, thereby, in the event of a fire in a specific one of the battery modules 100, keeping heat and flame from spreading to the adjacent battery modules 100 and preventing thermal runaway of the battery pack. In addition, a plurality of the reinforcing members 310 can be provided, and the plurality of the reinforcing members 310 can include a first reinforcing member 311 and a second reinforcing member 312, where the first reinforcing member 311 can have a greater width than the second reinforcing member 312. The first and second reinforcing members will be described later.

In addition, in the implementation illustrated in FIG. 2, a plurality of the battery modules 100 can be provided and mounted on the battery pack; the reinforcing member 310 extending in the lengthwise direction of the battery pack can be disposed between the adjacent battery modules 100; and the reinforcing bar 200 provided in the battery modules 100 can be disposed to extend in the width direction of the battery pack and span cross the battery pack. In addition, the coupling protrusion 210 formed at one end of the reinforcing bar 200 can be coupled to the coupling protrusion 210 of the adjacent reinforcing bar 200, and the coupling protrusion 210 formed at the other end of the reinforcing bar 200 can be coupled to the reinforcing member 310. In addition, as will be described later, the reinforcing bar 200 can have a hollow structure with the coupling protrusion 210 disposed to extend therein.

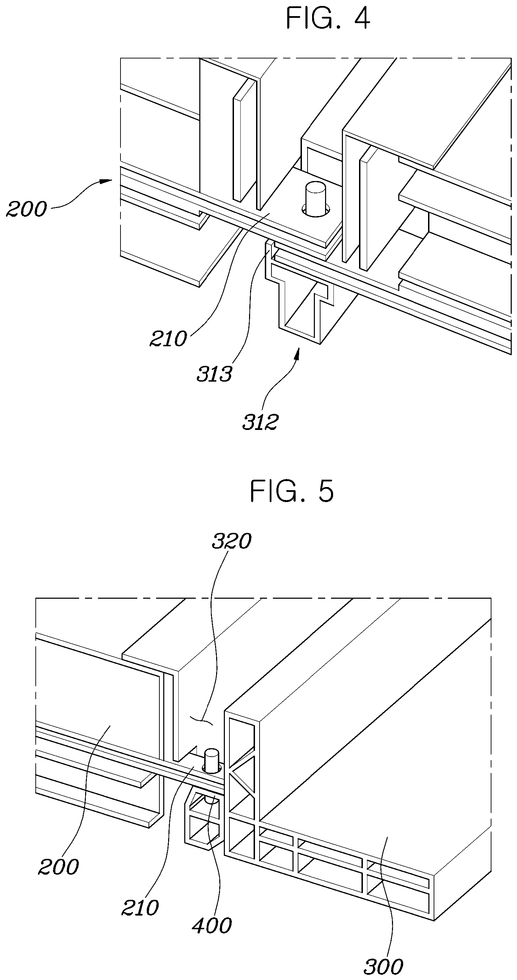

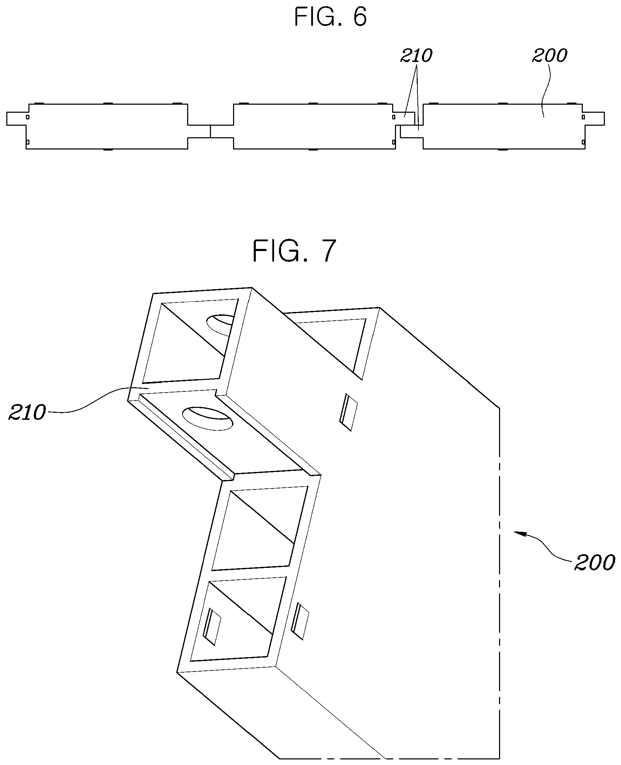

In addition, as in the implementation illustrated in FIG. 6, the reinforcing bars 200 of the adjacent battery modules 100 can be disposed in a row to form a load path. In addition, as will be described later, the heights of the points where the coupling protrusions 210 are formed at both ends of the reinforcing bar 200 can be different from each other. The coupling protrusion 210 formed at one end of the reinforcing bar 200 located in the middle can be disposed to be adjacent to the coupling protrusion 210 of the adjacent reinforcing bar 200, and can be coupled to the first reinforcing member 311, as in the implementation illustrated in FIG. 3. In addition, the coupling protrusion 210 formed at the other end of the reinforcing bar 200 located in the middle can vertically overlap the coupling protrusion 210 of the adjacent reinforcing bar 200, and can be coupled to the second reinforcing member 312 as in the implementation illustrated in FIG. 4.

For example, the heights of the points at which the coupling protrusions 210 are formed on the respective reinforcing bars 200 of the adjacent battery modules 100 can be different from each other, such that the coupling protrusions 210 of the adjacent reinforcing bars 200 can vertically overlap and be coupled to the reinforcing member 310. In this way, the plurality of the adjacent reinforcing bars 200 can be more strongly coupled, thereby enhancing performance against a collision and rigidity of the battery pack through an effective load path configuration.

In addition, a restricting portion 313 can be formed on the reinforcing member 310 where the coupling protrusions 210 of the plurality of the adjacent reinforcing bars 200 are vertically overlapped and coupled. The restricting portion 313 can extend in a height direction from one end of the reinforcing member 310 to restrict an assembly location of the reinforcing member 310 and the coupling protrusion 210. In addition, the restricting portion 313 can also be formed to cover a front surface of the coupling protrusion 210, which is located at a lower position among the vertically overlapping coupling protrusions 210.

In the implementation illustrated in FIG. 4, a groove can be formed, in the reinforcing member 310, at a location corresponding to the coupling protrusion 210 of the adjacent reinforcing bar 200, and the coupling protrusions 210 of the reinforcing bars 200 adjacent to the groove can be vertically overlapped and coupled to the reinforcing member 310. In addition, the restricting portion 313 extending in the height direction can be formed at one end of the reinforcing member 310 to cover the front surface of the coupling protrusion 210, which is located at the lower position among the vertically overlapping coupling protrusions 210. The restricting portion 313 can extend to have the same height as or a smaller height than the front surface of the coupling protrusion 210.

For example, a lower surface of the coupling protrusion 210 located at a higher position among the vertically overlapping coupling protrusions 210 and an upper surface of the coupling protrusion 210 located at the lower position among the vertically overlapping coupling protrusions 210 can be coupled through a complementary protrusion-groove structure. In addition, the complementary protrusion-groove structure can be molded to extend along a direction in which the coupling protrusions 210 extend at both ends of the lower surface of the coupling protrusion 210 located at the higher position and the upper surface of the coupling protrusion 210 located at the lower position. The complementary protrusion-groove structure can restrict an assembly location between the vertically overlapping coupling protrusions 210, and can enable more robust coupling between the adjacent reinforcing bars 200.

In addition, the vertically overlapping coupling protrusions 210 can be coupled and assembled in various ways, such as bonding, welding, and mechanical fastening. Specifically, the vertically overlapping coupling protrusions 210 can have holes formed at corresponding locations, and the coupling protrusions 210 can be bolted to each other. In addition, the reinforcing member 310 can have holes formed at locations corresponding to the coupling protrusions 210, such that the coupling protrusions 210 and the reinforcing members 310 can be bolted to each other.

In the implementation illustrated in FIG. 7, protrusions can be formed on the lower surface of the coupling protrusion 210 located at the higher position among the vertically overlapping coupling protrusions 210. The protrusions can be formed at both ends of the lower surface of the coupling protrusion 210 to protrude downward. In addition, holes can be formed on both the upper and lower surfaces of the coupling protrusion 210.

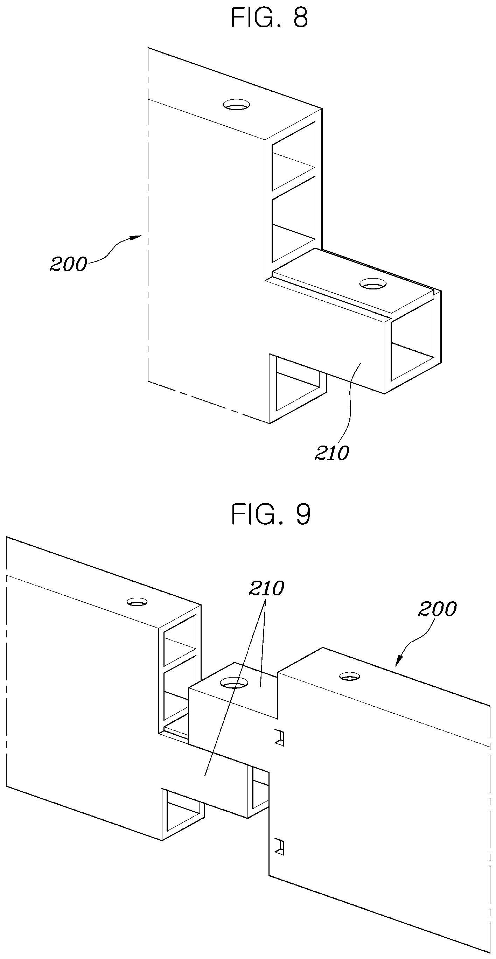

In the implementation illustrated in FIG. 8, a groove can be formed on the upper surface of the coupling protrusion 210 located at the lower position among the vertically overlapping coupling protrusions 210. The grooves can be formed on both ends of the upper surface of the coupling protrusion 210, and holes can be formed on both the upper and lower surfaces of the coupling protrusion 210.

In the implementation illustrated in FIG. 9, the vertically overlapping coupling protrusions 210 can be coupled through a complementary protrusion-groove structure such that an assembly location thereof can be restricted, and can have holes formed at corresponding locations such that the coupling protrusions 210 can be bolted to each other.

For example, the reinforcing member 310 can be composed of the first reinforcing member 311 and the second reinforcing member 312, and the first reinforcing member 311 can have a greater width than the second reinforcing member 312. The components for controlling the battery modules 100 can be concentrated in the first reinforcing member 311 and stored in a storage portion to be protected from external impact. In addition, the second reinforcing member 312 can have a smaller width than the first reinforcing member 311, thereby increasing a space in which the battery modules 100 can be mounted. This can contribute to improving the integration density of the battery pack and increasing energy density of the same.

In the implementation illustrated in FIG. 3, an upper portion of the first reinforcing member 311 can be recessed toward a central portion to form a storage portion. Components for battery control, such as a sensor and a bus bar of the adjacent battery modules 100, can be stored in the storage portion formed in the upper portion of the first reinforcing member 311 to be protected from external impact. In addition, the plurality of the adjacent reinforcing bars 200 can be disposed with the storage portion interposed therebetween and coupled to the first reinforcing member 311. In addition, the coupling protrusion 210 and the first reinforcing member 311 can be bolted to each other.

In addition, in the implementation illustrated in FIG. 4, the coupling protrusions 210 of the adjacent battery modules 100 can vertically overlap and be coupled to the second reinforcing member 312, and the vertically overlapping coupling protrusions 210 and the second reinforcing member 312 can be bolted to each other.

A fastening bracket 400 can be disposed on an inner side of a side surface of the pack case 300, and can be fastened to the coupling protrusion 210 to couple the reinforcing bar 200 to the pack case 300. The fastening bracket 400 can be located between the side surface of the pack case 300 and the battery modules 100 to protect the battery modules 100 from external impact. The fastening bracket 400 can vertically overlap the coupling protrusion 210 and be coupled to the same. In addition, the fastening bracket 400 and the coupling protrusion 210 can be coupled through a complementary protrusion-groove structure such that an assembly location thereof can be restricted.

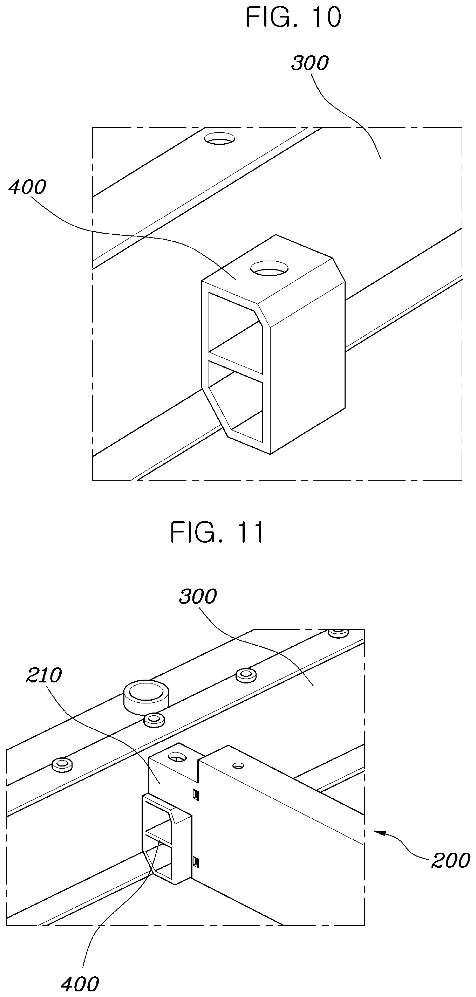

In the implementation illustrated in FIG. 10, grooves can be formed on both ends of an upper surface of the fastening bracket 400.

In addition, in the implementation illustrated in FIG. 11, the fastening bracket 400 can vertically overlap the coupling protrusion 210 to couple the reinforcing bar 200 to the pack case 300. The fastening bracket 400 and the coupling protrusion 210 can be strongly coupled since the complementary protrusion-groove structure restricts the assembly location thereof.

For example, a buffer space 320 can be formed, on the inner side of the side surface of the pack case 300, to be spaced apart a certain distance from the battery modules 100. The buffer space 320 can buffer external impact on the battery modules 100. Specifically, as shown in FIG. 5, the fastening bracket 400 can be formed in the buffer space 320 to further protect the battery modules 100 from external impact.

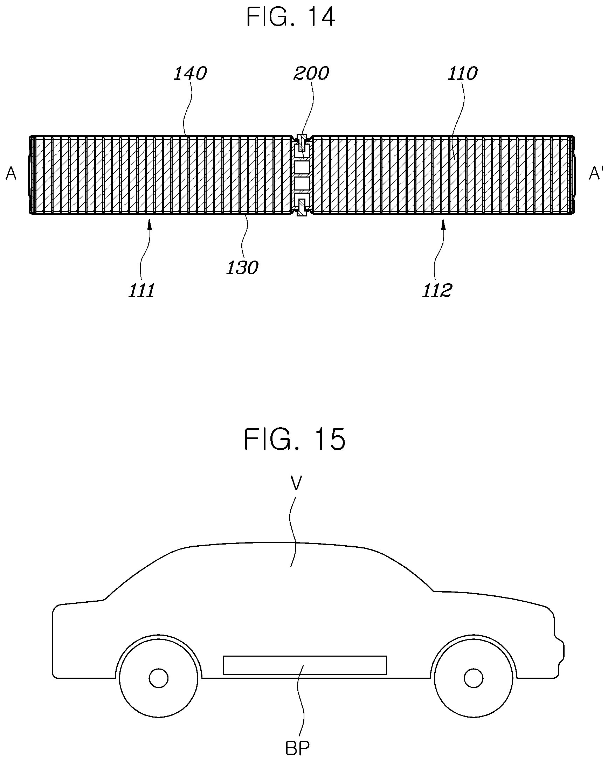

FIG. 12 is a view showing a battery module. FIG. 13 is an exploded perspective view of the battery module. FIG. 14 is a cross-sectional view showing cross-section A-A' in FIG. 12. A battery module of the present disclosure will be described with reference to FIG. 12-FIG. 14.

The battery modules 100 of the present disclosure can have a plurality of battery cells stacked thereon, and can include the reinforcing bar 200 provided between some adjacent battery cells among the battery cells, where the coupling protrusions 210, extending toward the outside of the battery modules 100 and protruding, are formed at both ends of the reinforcing bar 200.

For example, the reinforcing bar 200 can divide the plurality of stacked battery cells into a first set 111 and a second set 112. Specifically, as shown in FIG. 13 and FIG. 14, the reinforcing bar 200 can be disposed in the center of the battery modules 100 to divide the plurality of battery cells 110, stacked within the battery modules 100, into the first set 111 and the second set 112. In addition, the area of a surface of the battery cells in contact with the reinforcing bar 200 can correspond to the area of the battery cells, thereby effectively blocking the transfer of heat and flame between the battery cells in the battery modules 100.

In addition, the heights of the points where the coupling protrusions 210 are formed at both ends of the reinforcing bar 200 can be different from each other, such that the coupling protrusions 210 of the adjacent battery modules 100 can be vertically overlapped to enable robust coupling between each other.

In addition, the reinforcing bar 200 can be an extrudate manufactured using an extrusion method. Specifically, the battery modules 100 can have a hollow structure with a cavity formed in the central portion as shown in FIG. 14, and the reinforcing bar 200 can have a reinforcing portion formed to extend to come into contact with both surfaces of the hollow portion therein, thereby ensuring light weight and high rigidity.

For example, the battery modules 100 of the present disclosure can further include a side cover 120 configured to cover side surfaces of the plurality of battery cells 110. In addition, the coupling protrusions 210 can protrude to the outside by penetrating the side cover 120. Specifically, as shown in FIG. 12, a hole can be formed, in the side cover 120, at a location corresponding to the coupling protrusion 210, such that the side cover 120 can reliably cover the plurality of battery cells 110 without interfering with the coupling protrusion 210 protruding to the outside of the battery modules 100.

For example, the battery modules 100 of the present disclosure can further include a clamp 130. The clamp 130 can be disposed at lower portions of the plurality of battery cells 110 and extend in a direction in which the plurality of battery cells 110 are stacked to secure the plurality of battery cells 110 at the lower portions thereof. In addition, the clamp 130 and the reinforcing bar 200 can be coupled and assembled using various methods, such as bonding, welding, and mechanical fastening, and a clamp fixing portion 131 can be formed at a point where the clamp 130 intersects with the reinforcing bar 200 and coupled to the reinforcing bar 200.

Specifically, as shown in FIG. 13, the clamp 130 can be disposed at the bottom of the battery modules 100 and extend in the direction in which the plurality of battery cells 110 are stacked, and both ends of the clamp 130 can protrude upward such that the plurality of battery cells 110 can be fixed. In addition, the clamp fixing portion 131 protruding toward the reinforcing bar 200 can be formed in a central portion of the clamp 130 such that the clamp 130 and the reinforcing bar 200 can be bolted to each other.

For example, the battery modules 100 of the present disclosure can further include a top cover 140 disposed over the plurality of battery cells 110 and the reinforcing bar 200 to cover the plurality of battery cells 110 and the reinforcing bar 200. The top cover 140 can be formed with a venting structure such as a hole to effectively release heat, gas, and the like that can be generated in the battery cells 110, thereby preventing thermal runaway of the battery modules 100 while effectively protecting the plurality of battery cells 110 stacked in the battery modules 100. In addition, a top cover fixing portion 141 coupled to the reinforcing bar 200 can be formed on the top cover 140 at a point where the top cover 140 intersects with the reinforcing bar 200. The top cover 140 and the reinforcing bar 200 can be coupled and assembled in various ways, such as bonding, welding, and mechanical fastening.

Specifically, as shown in FIG. 13, the top cover 140 can be disposed over the battery modules 100 to cover the top of the plurality of battery cells 110, and holes can be formed to effectively release heat and gas that can be generated in the battery cells 110. In addition, the top cover fixing portion 141 can be formed in a central portion of the top cover 140 such that the top cover 140 and the reinforcing bar 200 can be bolted to each other.

FIG. 15 is a view showing a vehicle in which a battery pack is mounted. A vehicle including a battery pack of the present disclosure will be described with reference to FIG. 15.

The battery pack can be applicable to the battery pack BP of various vehicles V, such as an internal combustion engine vehicle, an electric vehicle, a hybrid vehicle, and a fuel cell vehicle. In addition to the vehicles V, the battery pack BP can be applicable in various fields such as an industrial energy storage system (ESS) or home ESS and a small battery pack.

Although the specific implementations of the present disclosure have been illustrated and described, those skilled in the art will appreciate that various modifications and changes to the present disclosure can be made without departing from the technical spirit of the present disclosure provided in the following claims.

## Claims

1. A battery pack comprising:
a pack case comprising a plurality of reinforcing members;
a battery module disposed between the plurality of reinforcing members, the battery module comprising a plurality of battery cells that are stacked inside the battery module; and
a reinforcing bar inserted into the battery module and provided between adjacent battery cells among the plurality of battery cells, the reinforcing bar comprising coupling protrusions that protrude from ends of the reinforcing bar and extend toward an outside of the battery module,
wherein the plurality of reinforcing members and the coupling protrusions of the reinforcing bar are fastened to the pack case.

2. The battery pack of claim 1, wherein the battery module is one of a plurality of battery modules that are mounted to the pack case, and
wherein the reinforcing bar is one of a plurality of reinforcing bars that are inserted into the plurality of battery modules, respectively, and that are disposed across the pack case.

3. The battery pack of claim 2, wherein each of the plurality of reinforcing members extends in a lengthwise direction of the pack case, and
wherein the reinforcing bar extends in a width direction of the pack case and is coupled to at least one of the plurality of reinforcing members.

4. The battery pack of claim 2, wherein the coupling protrusions of the reinforcing bar comprise:
a first coupling protrusion that is disposed at a first end of the reinforcing bar and coupled to one of the coupling protrusions of the adjacent reinforcing bar; and
a second coupling protrusion that is disposed at a second end of the reinforcing bar and coupled to one of the plurality of reinforcing members.

5. The battery pack of claim 2, wherein heights of the coupling protrusions of the reinforcing bars of adjacent battery modules among the plurality of battery modules are different from each other, and
wherein the coupling protrusions of the reinforcing bars of the adjacent battery modules overlap with each other along a vertical direction and are coupled to one of the plurality of reinforcing members.

6. The battery pack of claim 5, wherein at least one of the plurality of reinforcing members comprises a restricting portion that is disposed at an end thereof and extends in a height direction, and
wherein the restricting portion covers an end surface of one of the coupling protrusions and defines assembly locations of the at least one of the plurality of reinforcing members and the one of the coupling protrusions.

7. The battery pack of claim 6, wherein the coupling protrusions of the reinforcing bars of the adjacent battery modules comprise a lower coupling protrusion and an upper coupling protrusion that overlap with each other along the vertical direction, and
wherein the restricting portion covers the lower coupling protrusion.

8. The battery pack of claim 5, wherein the coupling protrusions of the reinforcing bars of the adjacent battery modules comprise a lower coupling protrusion and an upper coupling protrusion that overlap with each other along the vertical direction, and
wherein a lower surface of the upper coupling protrusion and an upper surface of the lower coupling protrusion are coupled to each other through a complementary protrusion-groove structure.

9. The battery pack of claim 1, wherein the plurality of reinforcing members comprises a first reinforcing member and a second reinforcing member, and
wherein a width of the first reinforcing member is greater than a width of the second reinforcing member.

10. The battery pack of claim 1, further comprising a fastening bracket disposed at an inner side surface of the pack case and fastened to one of the coupling protrusions to thereby couple the reinforcing bar to the pack case.

11. The battery pack of claim 10, wherein the fastening bracket and the one of the coupling protrusions are coupled through a complementary protrusion-groove structure.

12. The battery pack of claim 1, wherein the pack case has a buffer space defined between an inner side surface of the pack case and the battery module.

13. A battery module, comprising:
a plurality of battery cells that are stacked inside the battery module; and
a reinforcing bar provided between adjacent battery cells among the plurality of battery cells, the reinforcing bar comprising coupling protrusions that protrude from ends of the reinforcing bar and extends toward an outside of the battery module.

14. The battery module of claim 13, wherein heights of the coupling protrusions of the reinforcing bar are different from each other.

15. The battery module of claim 13, further comprising a side cover that covers side surfaces of the plurality of battery cells,
wherein the coupling protrusions pass through the side cover and protrude to the outside of the battery module.
